# FASCICULE DE BREVET EUROPEEN

(11) **EP 0 668 398 B1**
(45) Date de publication et mention de la délivrance du brevet: **13.05.1998**
(21) Numéro de dépôt: 94119364.1
(22) Date de dépôt: 08.12.1994
(51) Int. Cl.: E01B 31/13, E01B 31/18

(54) **Installation pour le reprofilage des rails d'une voie ferrée**
Vorrichtung zur Wiederprofilierung von Eisenbahnschienen
Device for reshaping railway rails

(30) Priorité: 18.02.1994 CH 498/94
(43) Date de publication de la demande: 23.08.1995
(73) Titulaire: SPENO INTERNATIONAL S.A., CH-1211 Genève 21 (CH)
(72) Inventeur: Jaeggi, Jean-Pierre, CH-1205 Genève (CH)
(74) Mandataire: Micheli & Cie

(56) Documents cités:
- EP-A- 0 266 167
- EP-A- 0 467 833
- CH-A- 633 336
- CH-A- 654 047
- DE-A- 3 222 208
- GB-A- 1 592 881

## Description

La présente invention concerne une installation de reprofilage des rails de chemin de fer travaillant en voie. Il existe de nombreux dispositifs permettant de re-profiler les rails d'une voie ferrée, ainsi que des véhicules ferroviaires équipés de ces dispositifs, en particulier ceux décrits dans les brevets CH 633.336; CH 654.047; CH 666.068 ou CH 675.440 qui comportent tous des unités de meulage permettant de corriger certains défauts des rails. Les rails en voie présentent non seulement des profils abîmés mais encore des ondulations longitudinales dont les amplitudes varient. Le brevet CH 680.672 décrit un procédé permettant de programmer à l'avance de façon optimale les opérations de reprofilage à effectuer sur un tronçon donné. Grâce à ce procédé il est possible d'optimiser les opérations de maintenance dans le but de réduire le temps d'occupation des voies. Si l'on détermine grâce à ce procédé qu'il faut enlever beaucoup de matière pour corriger les défauts du rail, le meulage ou le polissage des rails peuvent nécessiter plusieurs passages sur le même tronçon, même en utilisant des machines à unités de meulage multiple. Ceci est difficilement compatible avec le temps pouvant être affecté aux travaux de reprofilage en fonction du taux d'occupation des voies ferrées. En utilisant des fraises plutôt que des meules, il est possible d'enlever plus de matière et donc de travailler plus rapidement. Le fraisage des rails en atelier est connu et décrit par exemple dans le brevet français 2.659.584. Pour obtenir un reprofilage précis, lors du fraisage ou du meulage en voie, il faut veiller à ce que la meule ou la fraise soit guidée longitudinalement et transversalement. De plus le résultat est influencé par la base de guidage qui porte l'outil. En effet, le point avant de cette base de guidage se déplace sur une surface présentant des défauts qui sont partiellement reproduits par l'outil. Des dispositifs de reprofilage de rail par fraisage en voie ont été proposés notamment dans le brevet AT 234.137 qui utilise comme base de guidage une longue règle qui supporte deux têtes de fraisage inclinées. Le brevet allemand DE 32 22 208 se sert de deux patins réglables en hauteur qui forment une base symétrique de part et d'autre de la fraise. Ces dispositifs présentent l'inconvénient de ne pouvoir corriger qu'un type de défaut du rail à la fois. Les ondulations longitudinales des rails n'ayant pas toutes la même longueur d'ondes, il convient d'éliminer à la fois des ondulations longues (30 cm à 3 mètres) et des ondulations courtes (3cm à 30 cm). Les dispositifs existants ont des outils portés par une base de guidage unique et ne corrigent donc que les ondulations d'une certaine longueur d'ondes (longues avec une base de guidage longue) ce qui n'est pas compatible avec la qualité requise pour les réseaux à haute vitesse.

D'autre part la qualité du fini de fraisage est nettement insuffisante pour les trains à grande vitesse et il faut donc pour éliminer totalement les marques laissées par les dents de la fraise prévoir un polissage du rail, opération qui dans les dispositifs existants nécessite un passage ultérieur avec une autre machine.

Le but de la présente invention est d'obvier aux inconvénients cités précédemment. La titulaire propose à cet effet une installation de reprofilage d'au moins un rail d'une voie ferrée capable d'enlever une grande quantité de métal et d'éliminer aussi bien les ondulations longues que les ondulations courtes, tout en assurant un fini parfait des rails reprofilés. Un autre but de l'invention est d'augmenter la vitesse du travail de reprofilage du rail. Il faut en outre que l'installation de reprofilage permette d'éliminer et de traiter les résidus de métal résultant du reprofilage en voie.

La présente invention a pour objet une installation de reprofilage en voie de la surface du champignon d'au moins un rail d'une voie ferrée qui se distingue par les caractéristiques énumérées à la revendication 1.

Le dessin annexé illustre schématiquement et à titre d'exemple deux formes d'exécution de l'installation de reprofilage selon la présente invention.

La figure 1 est une vue d'ensemble de profil du wagon de fraisage portant un dispositif de fraisage.

La figure 2 est une vue de profil d'une première forme d'exécution du dispositif de fraisage.

La figure 3 est une vue en bout et en coupe du dispositif illustré à la figure 2.

La figure 4 est une vue de profil d'une deuxième forme d'exécution d une unité de fraisage illustrant la fraise en position de travail.

La figure 5 est une vue en élévation de l'unité de fraisage illustrée à la figure 4 en position de changement d'outil.

La figure 6 est une vue de dessus du dispositif de fraisage.

La figure 7 est une vue de profil en coupe longitudinale partielle du wagon de fraisage illustrant le dispositif de stockage et d'échange d'outils.

La figure 8 est une coupe transversale du wagon de fraisage montrant un changement d'outil.

La figure 9 est une vue de profil d'un dispositif refroidisseur du rail.

La figure 10 est une vue en bout du dispositif refroidisseur du rail.

La figure 11 est une vue du wagon de puissance.

La figure 12 est une vue de profil du wagon de meulage.

La figure 13 est une vue de détail du dispositif d'aspiration et de stockage des copeaux pendant l'opération de fraisage.

La figure 14 représente le dispositif permettant le déchargement des copeaux.

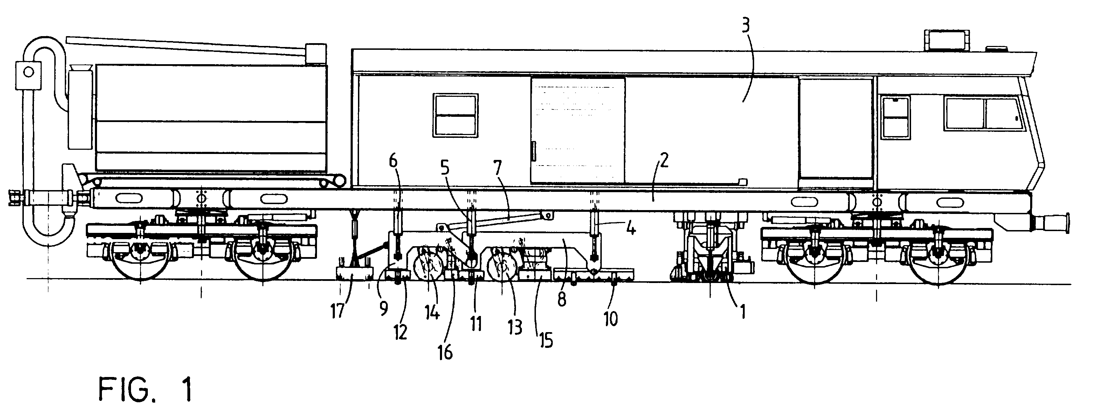

Le wagon de fraisage et de stockage des copeaux illustré à la figure 1 constitue l'élément de tête de l'installation de reprofilage des rails. Ce wagon comporte, situé à l'avant du dispositif de fraisage, un dispositif de mesure 1 qui permet d'évaluer les déformations du rail à traiter. Le dispositif de fraisage est fixé au châssis 2 du véhicule ferroviaire 3 à l'aide de vérins 4,5,6 qui permettent de maintenir le dispositif de fraisage en position de travail et de le relever. Un timon 7 relie le châssis 2 au cadre 9 du dispositif de fraisage. Ce timon 7 permet l'entraînement le long de la voie du dispositif de fraisage. Le dispositif de fraisage comporte deux cadres 8,9 articulés entre eux. Ces cadres 8,9 reposent en trois points sur chaque rail par l'intermédiaire d'unités de support et de guidage 10,11,12. Les cadres 8 et 9 ont une longueur différente, le cadre 8 portant l'unité de fraisage 13 étant plus long que le cadre 9 qui porte l'unité de fraisage 14. Ces cadres 8,9 constituent chacun une base de guidage pour l'unité de fraisage 13,14 qu'ils portent. L'unité de fraisage 13 portée par le cadre 8 le plus long permettra d'éliminer les ondulations longues du rail, alors que l'unité de fraisage 14 portée par le cadre 9 éliminera les ondulations courtes.

Chacune des unités de fraisage 13,14 est munie d'une fraise ainsi que des moyens de déplacement de cette fraise qui seront décrits en détail ci-dessous. La figure 1 illustre encore des dispositifs de chauffage du rail 15,16 situés à l'avant de chacune des deux unités de fraisage 13,14 ainsi qu'un dispositif de refroidissement du rail 17 situé à l'arrière du dispositif de fraisage. Les dispositifs de chauffage du rail sont montés sur les cadres 8,9 respectivement. L'unité de refroidissement 17 est tractée par le second cadre 9 à l'aide d'un timon.

L'unité de mesure 1 des déformations du rail permet de déterminer la profondeur de coupe à laquelle on désire faire travailler les fraises, ainsi que la puissance à fournir aux unités de chauffage pour une vitesse d'avancement donnée.

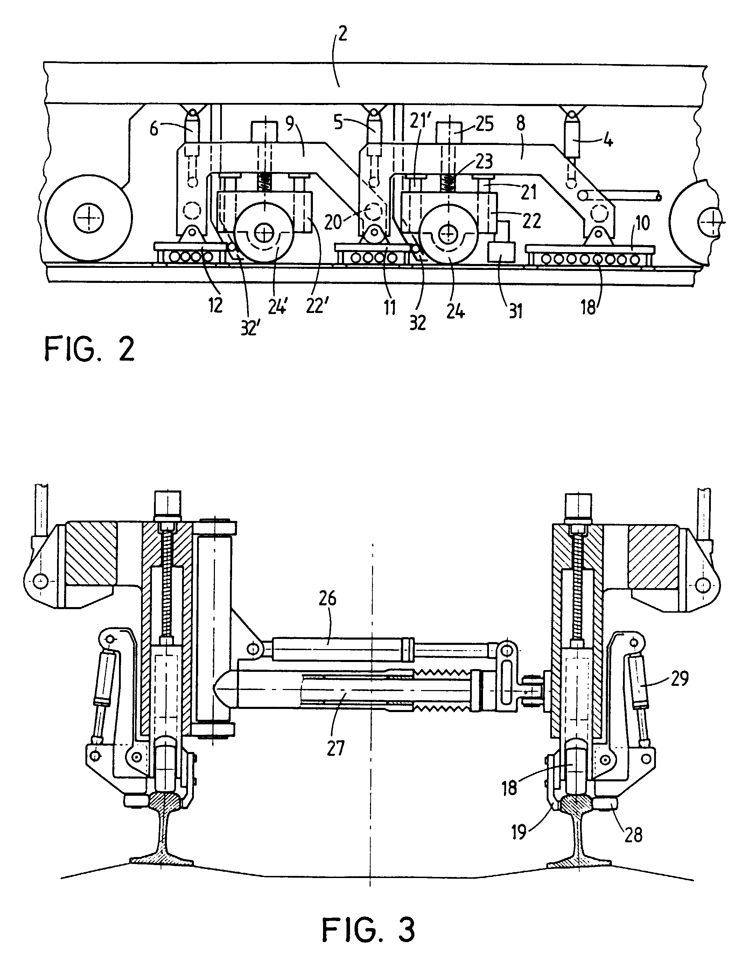

La figure 2 illustre schématiquement et plus en détail une forme d'exécution du dispositif de fraisage. Ce dispositif comporte un premier cadre 8 relié par l'intermédiaire de deux vérins 4,5 au châssis 2 du véhicule. Ces vérins 4,5 maintiennent le cadre 8 sous le châssis 2 et permettent de le relever lors de la marche haut le pied par exemple. En fonctionnement, ces vérins 4,5 permettent d'appliquer l'unité de fraisage contre le rail avec une force déterminée.

Le cadre 8 vu de coté comporte une partie horizontale s'étendant approximativement entre les deux vérins 4 et 5. Cette partie horizontale se prolonge par un montant oblique vers l'avant et vertical à l'arrière. Le montant oblique est relié à un premier dispositif d'appui et de guidage 10. Ce dispositif 10 est muni de roulettes 18 qui sont en contact avec le rail en position de travail et de patins de guidage 19. Un deuxième dispositif d'appui et de guidage 11 sert de support au montant arrière du cadre 8. Le dispositif de fraisage comporte encore un second cadre 9 portant une seconde unité de fraisage. Le montant avant oblique du deuxième cadre 9 est articulé sur le montant arrière du cadre 8 au moyen d'un axe 20 perpendiculaire à l'axe longitudinal du rail. Le montant arrière du cadre 9 repose sur un dispositif d'appui et de guidage 12 également muni de roulettes et de patins de guidage. Les deux cadres 8,9 articulés entre eux reposent en trois points sur les rails.

Deux colonnes de guidage 21,21' solidaires de la partie horizontale du cadre 8 s'étendent perpendiculairement à cette dernière en direction du rail. Un support 22 muni de deux alésages correspondant aux colonnes de guidage 21,21' est relié par l'intermédiaire d'une vis 23 au cadre 8. Ce support 22 comporte une fraise 24 ainsi que le moteur servant à son entraînement.

Grâce au dispositif de commande 25 de la vis 23, il est possible de faire varier la distance entre le support 22 et le rail, et de ce fait de régler la profondeur de coupe de la fraise 24. Une deuxième unité de fraisage est agencée de la même façon sous le cadre 9.

La figure 3 qui est une vue en bout du dispositif de fraisage montre le dispositif qui permet de régler l'écartement des cadres 8,9 associés à chaque rail. Un vérin hydraulique 26 couplé à un dispositif de guidage 27 permet de plaquer les patins de guidage 19 contre le flanc intérieur de chaque rail. Ces patins 19 peuvent être remplacés par des galets de guidage prenant appui contre le flanc intérieur du rail. Le dispositif de guidage est encore muni d'une roulette de guidage 28 qui est appliquée sous l'action d'un vérin 29 contre le flanc extérieur du rail assurant de ce fait un guidage transversal parfait. Les dispositifs d'appui et de guidage 10,11,12 comportent plusieurs roulettes 18 et patins 19. Les roulettes 18 peuvent dans une variante être remplacées par des patins d'appui. Ces roulettes 18 et leurs patins 19 peuvent être espacés les uns des autres d'une valeur fixe ou selon une fonction déterminée. En définissant un espacement irrégulier entre les roulettes 18, par exemple un espacement correspondant aux nombres premiers, on évite qu'en présence d'ondulations régulières du rail, les roulettes reposent toutes sur un maximum ou un minimum de l'amplitude de l'ondulation du rail. Grâce aux dispositifs d'appui et de guidage 10,11,12 ainsi qu'aux vérins d'écartement 26 on assure un positionnement parfait des cadres 8,9 par rapport au rail. Ce guidage transversal du dispositif de fraisage permet d'obtenir une grande précision lors du fraisage. Les cadres 8 et 9 ont des longueurs différentes et servent de base de guidage aux fraises 24,24'. La base de guidage de la première fraise, formée par le cadre 8 et les dispositifs d'appui 10,11, est plus longue que la base de guidage 9,11,12 de la seconde fraise 24'. Ainsi la première fraise va pouvoir corriger les ondulations les plus longues alors que la deuxième fraise 24' portée et guidée par une base 9 plus courte corrige les ondulations plus courtes. La distance entre les deux fraises est déterminée pour assurer la meilleure fonction de transfert de l'ensemble, c'est-à-dire la meilleure correction des ondulations longues et courtes du rail. On obtient ainsi non seulement une très forte diminution de l'amplitude des défauts, mais aussi une excellente qualité de surface grâce au fait que la deuxième fraise 24' travaille à une profondeur de coupe pratiquement constante, les défauts importants ayant été éliminés par la première fraise 24.

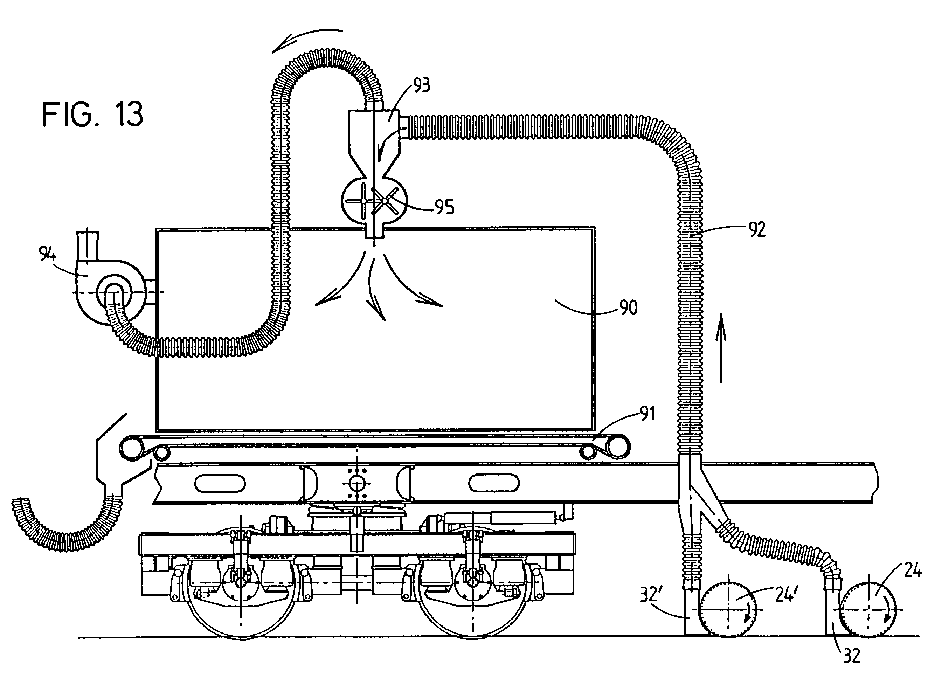

La figure 2 illustre encore schématiquement une unité de chauffage 31 montée sur le châssis 22. Cette unité de chauffage 31 permet d'amener la pellicule superficielle du champignon du rail à une température de l'ordre de quelques centaines de degrés, ce qui facilite grandement le travail des fraises 24,24'. La température de travail est adaptée à chaque type d'acier des rails. Le chauffage est généralement réalisé grâce à un dispositif de chauffage par induction HF, mais on peut également envisager un dispositif de chauffage par laser ou tout autre dispositif permettant d'amener rapidement la couche superficielle du rail à une température élevée. Une deuxième unité de chauffage (non illustrée) peut être agencée sur le support 22' de la deuxième fraise 24'. Le chauffage du rail permet d'une part d'augmenter la productivité (vitesse d'avancement et enlèvement de matière) du fraisage d'un facteur de l'ordre de 5 et d'autre part l'usure des fraises est réduite d'un facteur du même ordre de grandeur. Associées à chaque unité de fraisage, on trouve les entrées 32,32' d'un dispositif d'aspiration qui permet de récupérer les copeaux produits par les fraises. Le dispositif d'aspiration et de stockage des copeaux est décrit en référence à la figure 13.

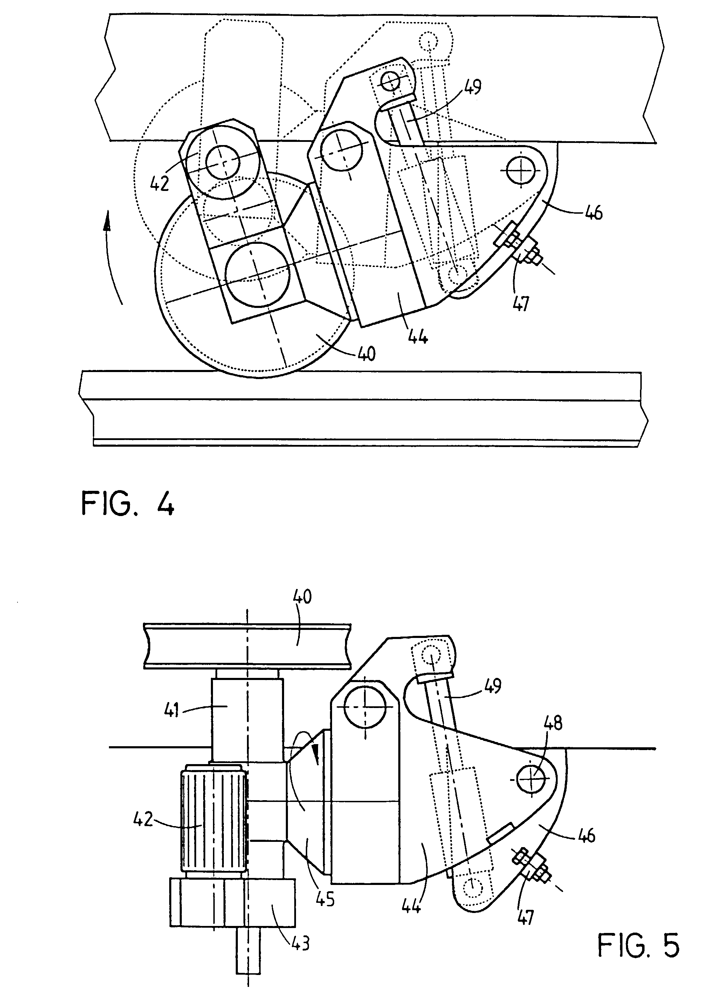

Les figures 4,5 illustrent en détail une deuxième forme d'exécution des unités de fraisage ainsi que leur mode de fixation sur le cadre qui leur sert de base de guidage. L'unité de fraisage comporte une fraise 40 montée sur un mandrin 41. Cette fraise 40 est entraînée en rotation par un moteur 42 couplé à un entraînement 43 qui peut être muni d'un réducteur de vitesse ou d'un embrayage. Cet ensemble est monté sur un support 44 par l'intermédiaire d'un élément de liaison 45. Cet élément de liaison 45 est monté pivotant sur le support 44 selon un axe contenu dans un plan vertical passant par un axe parallèle à l'axe longitudinal du rail. Des moyens (non illustrés) sont agencés dans le support 44 permettant de faire varier la position angulaire de l'élément de liaison 45 par rapport au support 44 sous l'action d'un organe de commande. Ainsi l'unité de fraisage peut effectuer une rotation de 90 degrés, ce qui permet d'amener successivement la fraise d'une position de travail sur le rail (figure 4) à une position de changement des outils comme illustré à la figure 5. Le cadre 8 qui sert de base de guidage à l'unité de fraisage comporte une pièce 46 munie d'une butée mécanique 47. Le support 44 est monté pivotant sur la pièce 46 autour d'un axe 48. En actionnant un vérin 49 dont la tige est solidaire du support 44, et dont le cylindre est fixé à la pièce 46, il est possible de déplacer la fraise 40 dans le plan vertical perpendiculairement aux rails. Ceci permet d'amener la fraise plus ou moins près du rail en fonction de la profondeur de coupe désirée pour le reprofilage. L'unité de fraisage en position relevée est indiquée en pointillés à la figure 4.

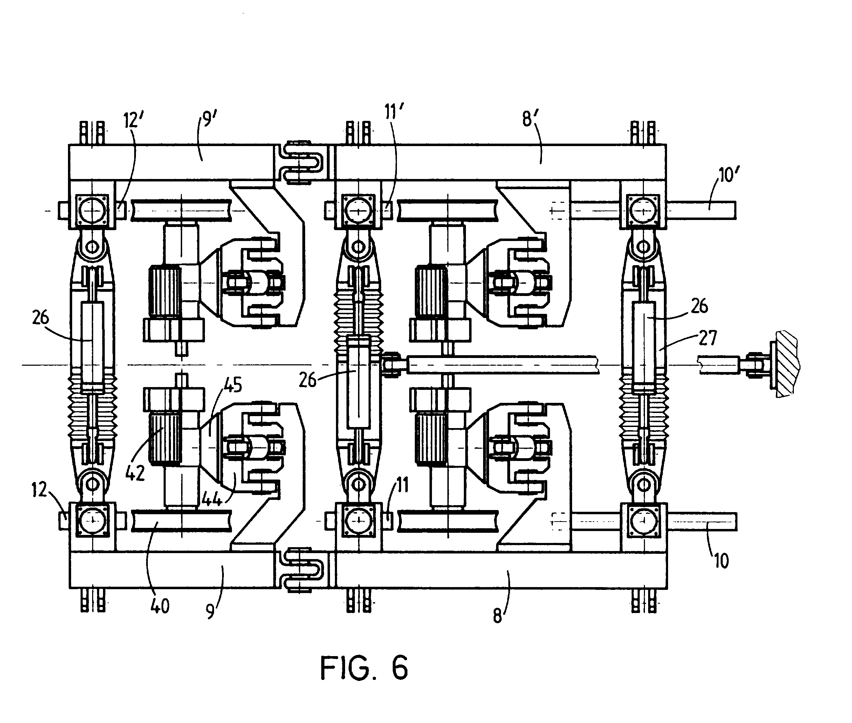

La figure 6 illustre le dispositif de fraisage vu de dessus qui comporte quatre unités de fraisage agencées dans leurs cadres respectifs 8,9,8',9'. Les vérins d'écartement 26 permettent de régler l'écartement entre les dispositifs d'appui et de guidage 10,10',11,11',12,12' sur lesquels reposent les cadres 8,9,8',9' qui portent les unités de fraisage.

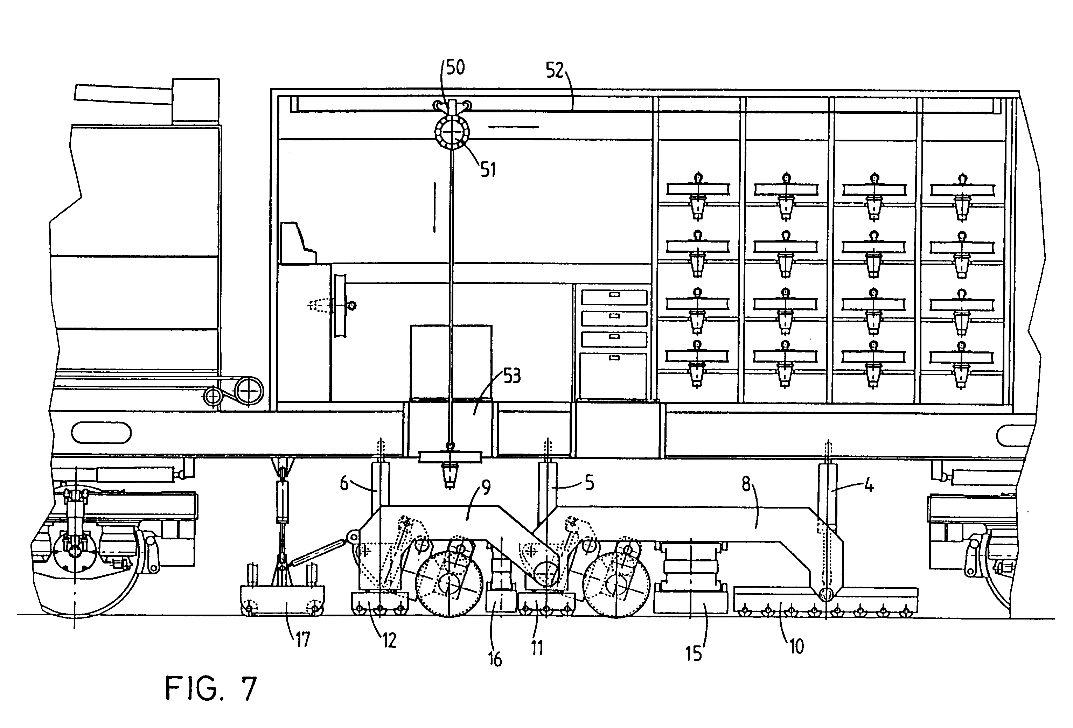

Le wagon de fraisage et de stockage des copeaux illustré en coupe longitudinale à la figure 7 montre le dispositif qui permet le changement de l'outil depuis l'intérieur du wagon. Un chariot 50 portant un palan 51 peut se déplacer longitudinalement le long d'un rail 52 fixé au plafond du wagon et venir charger une fraise située dans la partie avant du wagon qui constitue le stock de fraises. La fraise est amenée grâce au palan 51 à travers une ouverture 53 pratiquée dans le plancher du wagon, au dessus de l'unité de fraisage sur laquelle on désire effectuer un changement d'outil.

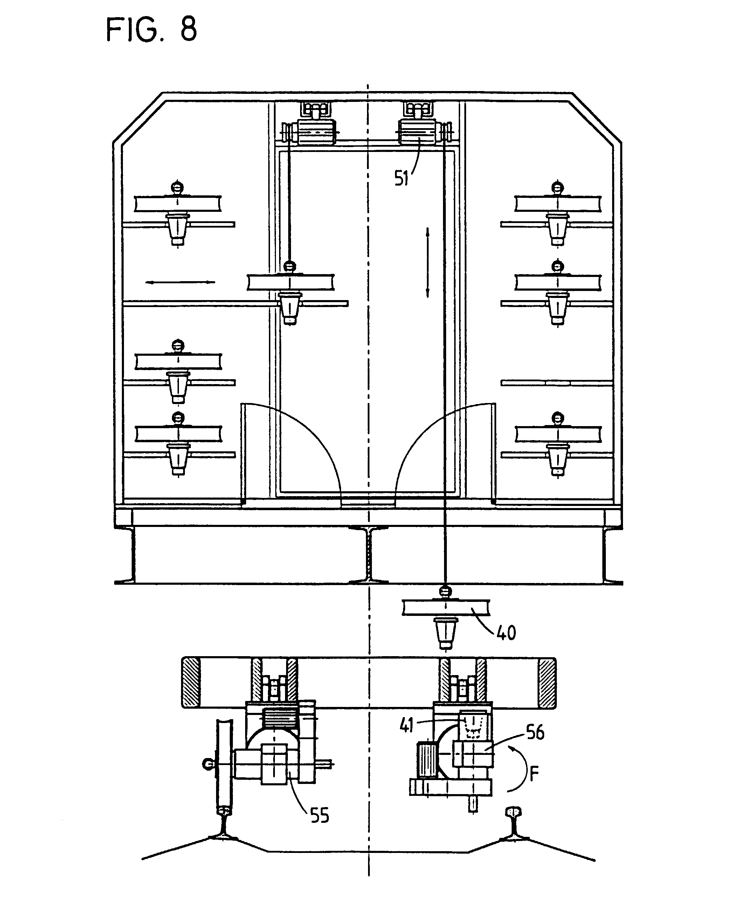

La figure 8 montre dans une autre vue le principe de changement des fraises. L'unité de fraisage 55 située sur la gauche de la figure est en position de service en train de fraiser le rail, alors que l'unité de fraisage 56 est illustrée dans une position permettant le changement de l'outil après avoir subi une rotation de 90° autour d'un axe parallèle au rail dans le sens de la flèche F. Dans cette position, le palan 51 peut aligner la fraise 40 en regard du mandrin 41 de l'unité de fraisage. La fixation par cône morse de la fraise permet un changement rapide et aisé des fraises.

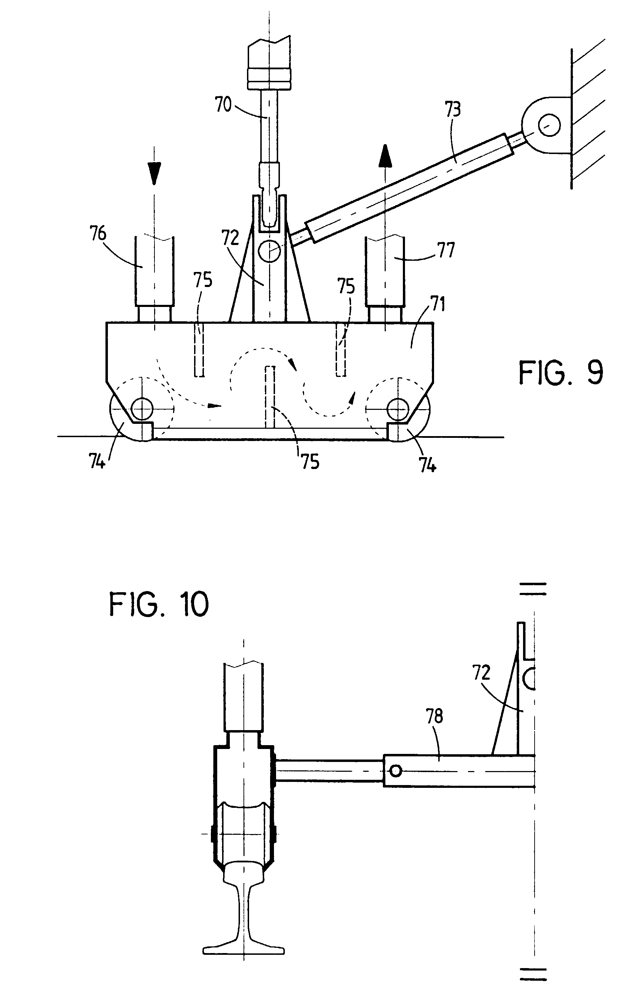

La figure 9 illustre le dispositif de refroidissement 17 situé à l'arrière des unités de fraisage. Ce dispositif est relié au châssis 2 du véhicule ferroviaire par un vérin 70 qui permet de relever le dit dispositif. Le piston de ce vérin 70 est relié au bâti 71 du refroidisseur par l'intermédiaire d'une pièce de liaison 72. Cette pièce de liaison 72 reçoit également une des extrémités d'un timon 73 dont l'autre extrémité est solidaire du cadre 9 formant la base de guidage de la deuxième unité de fraisage. Ce timon 73 permet l'entraînement et le guidage du refroidisseur. Le bâti 71 du refroidisseur comporte des roulettes de guidage 74 qui viennent prendre appui sur le rail en position de service. A l'intérieur du bâti 71, des chicanes 75 sont agencées de telle façon qu'elles provoquent un écoulement tourbillonnaire du fluide de refroidissement qui circule dans le bâti. Le bâti 71 comporte encore sur la partie supérieure une entrée 76 et une sortie 77 du fluide de refroidissement. La figure 10 illustre en coupe partielle le refroidisseur et montre un vérin 78 connecté à la pièce de liaison 72 et qui permet d'ajuster l'écartement entre les refroidisseurs associés a chacun des rails et d'assurer de ce fait un guidage transversal des refroidisseurs sur les rails.

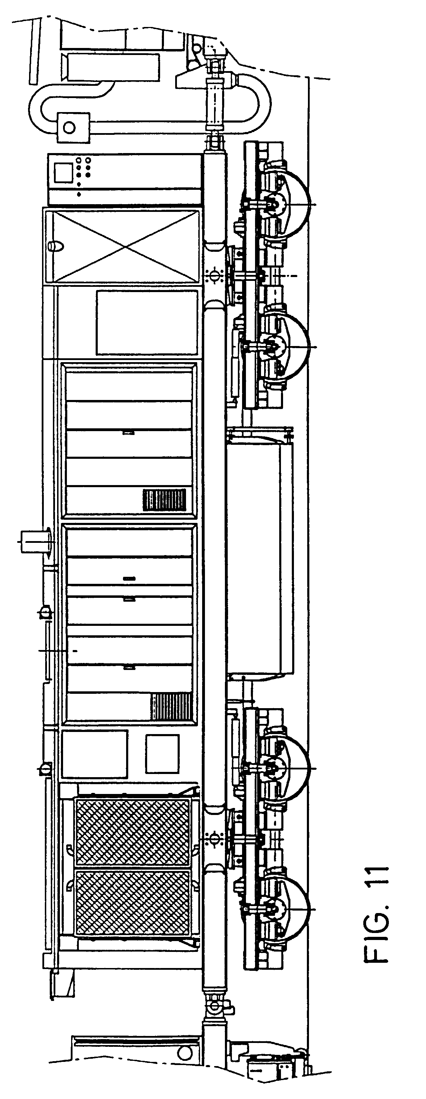

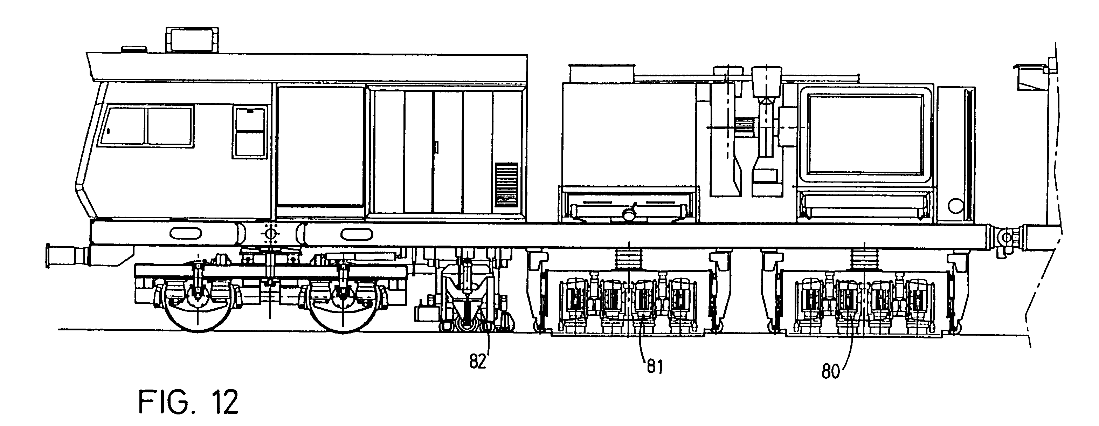

La figure 11 illustre le wagon de puissance utilisé dans l'installation de reprofilage des rails. Ce wagon de puissance fournit l'énergie électrique nécessaire à l'alimentation des unités de fraisage ainsi qu'à l'alimentation des unités de chauffage. Ce wagon de puissance est situé derrière le wagon de fraisage qui est en tête du convoi et devant un wagon illustré à la figure 12 qui porte des unités 80,81 de meulage et de finition permettant d'éliminer les stries laissées sur le rail par le travail des fraises. Ces unités de meulage ou de polissage sont par exemple du type décrit dans les brevets US 4 615 150 ou US 5 265 379. Les meules utilisées peuvent être des meules lapidaires, périphériques, des meules de forme ou des blocs abrasifs de forme a mouvement alternatif. Ce wagon est de plus équipé d'un dispositif d'aspiration et de stockage des poussières produites par le meulage. Le wagon de meulage comporte également une unité de mesure 82 située derrière les unités de meulage. Cette unité 82 permet de mesurer la qualité du reprofilage obtenu et grâce à un asservissement des unités de fraisage et des unités de chauffage, de corriger le cas échéant le réglage de la profondeur de coupe des unités de fraisage, et/ou la puissance de chauffe des unités de chauffage.

La figure 13 illustre en détail le dispositif permettant l'aspiration et le stockage des copeaux pendant l'opération de fraisage. La partie arrière du wagon de fraisage comporte un container à copeaux 90. Un tapis roulant 91 est agencé dans le fond du container 90. Derrière chacune des fraises 24,24' se trouve une bouche d'aspiration 32,32' connectée à un tuyau d'aspiration 92 qui débouche dans un dispositif séparateur 93. Un ventilateur 94, fixé sur le wagon, provoque l'aspiration des copeaux qui tombent dans le dispositif 93. Ce dispositif 93 est muni de pales 95 entraînées en rotation qui empêchent l'accumulation des copeaux à l'intérieur du dispositif et facilite leur évacuation vers le container 90 et leur distribution dans celui-ci.

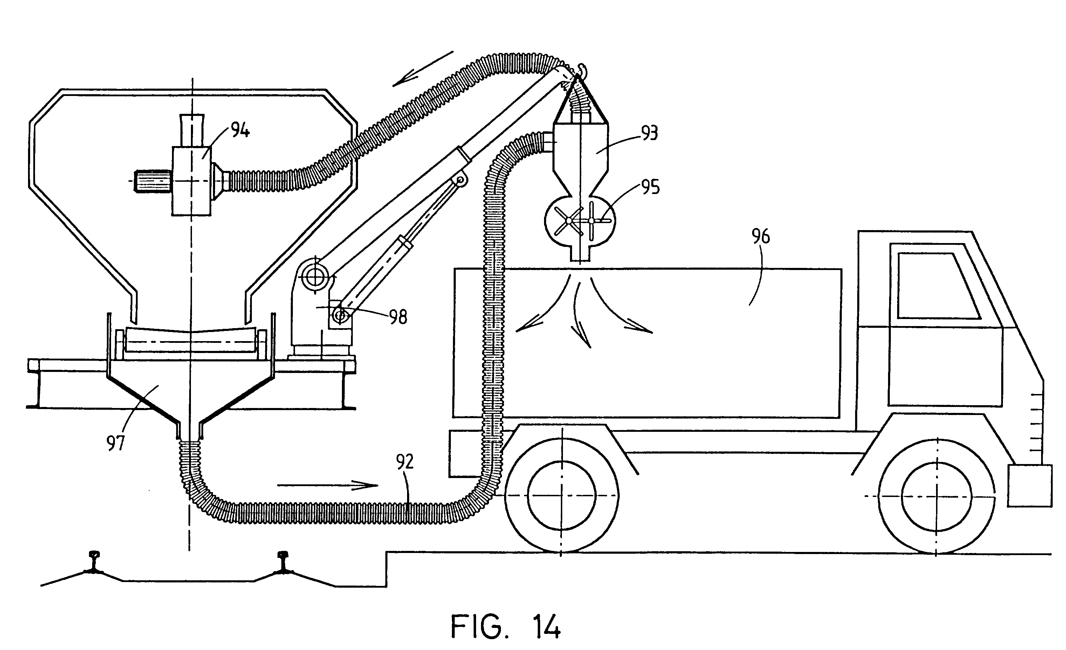

La figure 14 illustre l'opération de déchargement des copeaux. L'installation de reprofilage étant à l'arrêt, un camion benne 96 vient se ranger à proximité de l'installation. On déconnecte le tuyau 92 de l'embout reliant les bouches d'aspiration 32,32' et on le connecte à la sortie d'un récipient de décharge 97 situé en dessous du container 90 et dans lequel débouche le tapis roulant 91. La mise en marche du tapis roulant 91 provoque l'évacuation des copeaux vers le récipient de décharge 97.

Une grue hydraulique à pivot 98 montée sur le wagon de fraisage permet de déplacer le dispositif séparateur 93 en dessus du camion benne 96. Le ventilateur 94 provoque ensuite l'aspiration des copeaux tombés dans le récipient de décharge 97 vers le dispositif séparateur 93 qui les évacue dans la benne du camion. Dans une variante non illustrée, l'aspiration des copeaux peut être remplacée par un dispositif comme un tambour magnétique qui permet de récupérer les copeaux par attraction magnétique.

L'installation de reprofilage telle que décrite comporte un wagon de fraisage à l'avant, un wagon de puissance au centre et un wagon de meulage et de polissage des rails. Il va de soi que ces opérations peuvent être dissociées si par exemple les vitesses de travail ne sont pas les mêmes pour les différentes opérations. De même, on peut prévoir que les différentes unités (fraisage, chauffage, mesure, meulage) soient agencées sous un véhicule unique.

## Revendications

1. Installation de reprofilage en voie d'au moins un rail d'une voie de chemin de fer, comportant un dispositif de fraisage (13,14) monté sous un véhicule ferroviaire (3) et déplaçable par rapport à celui-ci à l'aide de moyens de relevage et d'application (4,5,6) contre le rail, caractérisée par le fait qu'elle comporte au moins une unité de chauffage (15,16,31) du rail située devant le dispositif de fraisage (13,14).

2. Installation selon la revendication 1, caractérisée par le fait que l'unité de chauffage (31) du rail est constituée d'un dispositif à induction haute fréquence.

3. Installation selon la revendication 1, caractérisée par le fait que l'unité de chauffage (31) est constituée d'un dispositif de chauffage par rayon laser.

4. Installation selon l'une des revendications précédentes, caractérisée par le fait que l'unité de chauffage (15,16) est reliée au châssis du véhicule par des moyens de relevage.

5. Installation selon l'une des revendications précédentes, caractérisée par le fait qu'elle comporte une unité de refroidissement (17) du rail guidée le long du rail, située à l'arrière du dispositif de fraisage (13,14) et reliée au châssis du véhicule ferroviaire par des moyens de relevage (70).

6. Installation selon la revendication 5, caractérisée par le fait que l'unité de refroidissement (17) comporte un bâti (71) muni d'un orifice d'entrée (76) et d'un orifice de sortie (77) permettant la circulation d'un fluide de refroidissement; par le fait que des chicanes (75) sont agencées à l'intérieur du bâti de telle sorte qu'elles provoquent un écoulement tourbillonnaire du fluide de refroidissement.

7. Installation selon l'une des revendications précédentes, caractérisée par le fait que le dispositif de fraisage comporte au moins deux unités de fraisage (13,14), comprenant chacune au moins une fraise entraînée en rotation par un moteur; par le fait que chaque unité de fraisage est portée par un support déplaçable verticalement par rapport à un cadre (8,9) guidé le long du rail; par le fait que les deux cadres présentent des longueurs différentes et sont articulés l'un par rapport à l'autre suivant un axe perpendiculaire à l'axe longitudinal du rail; par le fait que ces cadres (8,9) sont reliés au châssis du véhicule par les moyens de relevage et d'application (4,5,6) contre le rail.

8. Installation selon la revendication 7, caractérisée par le fait que les unités de fraisage sont portées par un support (22,22') monté coulissant verticalement sur le cadre et par le fait que des moyens (25) sont prévus pour commander la position de ce support par rapport au cadre et donc par rapport au rail.

9. Installation selon la revendication 1, caractérisée par le fait que les unités de fraisage sont portées par un support (44) pivoté sur le cadre suivant un axe perpendiculaire à l'axe longitudinal du rail et par le fait que ce support est relié à un vérin (49) commandant la position angulaire du support par rapport au cadre.

10. Installation selon la revendication 3, caractérisée par le fait que l'unité de fraisage est montée pivotante sur son support (44) selon un axe contenu dans un plan vertical passant par un axe parallèle à l'axe longitudinal du rail.

11. Installation selon l'une des revendications précédentes, caractérisée par le fait que les cadres (8,9) reposent sur le rail par l'intermédiaire de dispositifs d'appui et de guidage (10,11,12) munis de roulettes (18) ou de patins d'appui (19) en contact avec la surface de roulement du rail et de patins ou de galets de guidage qui prennent appui contre le flanc intérieur du rail.

12. Installation selon l'une des revendications précédentes, caractérisée par le fait que les cadres (8,9) portant les unités de fraisage, associés à chacun des rails, sont reliés au moyen de vérins (26) permettant de régler l'écartement entre ces cadres.

13. Installation selon l'une des revendications 7 à 12, caractérisée par le fait que les unités de chauffage (31) sont montées sous les cadres (8,9) du dispositif de fraisage.

14. Installation selon l'une des revendications 7 à 12, caractérisée par le fait que les unités de chauffage (31) sont montées sur le support (22) des unités de fraisage.

## Patentansprüche

1. Vorrichtung zur Nachprofilierung von zumindest einer verlegten Eisenbahnschiene mit einer Fräsvorrichtung (13, 14), die unter einen Eisenbahnwagen (3) montiert ist und in Bezug auf diesen Wagen mit Hilfe von Hebeorganen und Organen (4, 5, 6) zum Andrücken an die Schiene verschoben werden kann, wobei die Nachprofiliereinrichtung dadurch gekennzeichnet ist, dass sie zumindest eine Einheit (15, 16, 31) zum Aufheizen der Schiene umfasst, die vor der Fräseinrichtung (13, 14) sitzt.

2. Vorrichtung gemäss Anspruch 1, dadurch gekennzeichnet, dass die Einheit (31) zum Aufheizen der Schiene aus einer Hochfrequenz-Induktionseinrichtung besteht.

3. Vorrichtung gemäss Anspruch 1, dadurch gekennzeichnet, dass die Einheit (31) zum Aufheizen aus einer Laserstrahl-Heizeinrichtung besteht.

4. Vorrichtung gemäss einem der vorangehenden Ansprüche, dadurch gekennzeichnet, dass die Einheit (15, 16) zum Aufheizen durch Hebeorgane mit dem Wagengestell verbunden ist.

5. Vorrichtung gemäss einem der vorangehenden Ansprüche, dadurch gekennzeichnet, dass sie eine Schienenkühleinheit (17) umfasst, die entlang der Schiene geführt wird, hinter der Fräsvorrichtung (13, 14) sitzt und über Hebeorgane (70) mit dem Eisenbahnwagengestell verbunden ist.

6. Vorrichtung gemäss Anspruch 5, dadurch gekennzeichnet, dass die Kiihleinheit (17) einen Rahmen (71) umfasst, der mit einer Eintrittsöffnung (76) und einer Austrittsöffnung (77) ausgestattet ist, die den Umlauf eines Kühlfluids gestatten; und dadurch, dass Umlenkplatten (75) so im Inneren des Rahmens angeordnet sind, dass sie eine turbulente Strömung des Kühlfluids hervorrufen.

7. Vorrichtung gemäss einem der vorangehenden Ansprüche, dadurch gekennzeichnet, dass die Fräsvorrichtung zumindest zwei Fräseinheiten (13, 14) umfasst, deren jede zumindest eine von einem Motor in Drehbewegung versetzte Fräse umfasst; dadurch, dass jede Fräseinheit auf einem Träger sitzt, der bezüglich eines entlang der Schiene geführten Rahmens (8, 9) senkrecht verschoben werden kann; dadurch, dass die beiden Rahmen verschiedene Längen aufweisen und entlang einer zur Schienenlängsachse senkrechten Achse gelenkig miteinander verbunden sind; und dadurch, dass diese Rahmen (8, 9) mit Hilfe der Hebeorgane und Organe (4, 5, 6) zum Andrücken an die Schiene mit dem Wagengestell verbunden sind.

8. Vorrichtung gemäss Anspruch 7, dadurch gekennzeichnet, dass die Fräseinheiten auf einem Träger (22, 22') sitzen, der senkrecht gleitend auf den Rahmen montiert ist; und dadurch, dass Organe (25) vorgesehen sind, um die Lage dieses Trägers bezüglich des Rahmens und somit bezüglich der Schiene zu steuern.

9. Vorrichtung gemäss Anspruch 1, dadurch gekennzeichnet, dass die Fräseinheiten auf einem Träger (44) sitzen, der um eine zur Schienenlängsachse senkrechte Achse schwenkend auf dem Rahmen angebracht ist; und dadurch, dass dieser Träger mit einer Winde (49) verbunden ist, die die Winkellage des Trägers beziiglich des Rahmens steuert.

10. Vorrichtung gemäss Anspruch 3, dadurch gekennzeichnet, dass die Fräseinheit schwenkbar um eine Achse, die in einer senkrechten Ebene liegt, die durch eine zur Schienenlängsachse parallele Achse läuft, auf ihren Träger (44) montiert ist.

11. Vorrichtung gemäss einem der vorangehenden Ansprüche, dadurch gekennzeichnet, dass die Rahmen (8, 9) vermittels Auflage- und Führungsvorrichtungen (10, 11, 12), die mit Auflagerollen (18) oder -schuhen (19) in Berührung mit der Schienenrollfläche und mit an der Schieneninnenflanke anliegenden Führungsschuhen oder -rollen ausgerüstet sind, auf der Schiene ruhen.

12. Vorrichtung gemäss einem der vorangehenden Ansprüche, dadurch gekennzeichnet, dass die Rahmen (8, 9), die die jeder der Schienen zugeordneten Fräseinheiten tragen, durch Winden (26), die den Abstand zwischen den Rahmen einzustellen gestatten, miteinander verbunden sind.

13. Vorrichtung gemäss einem der Ansprüche 7 bis 12, dadurch gekennzeichnet, dass die Aufheizeinheiten (31) unter die Rahmen (8, 9) der Fräsvorrichtung montiert sind.

14. Vorrichtung gemäss einem der Ansprüche 7 bis 12, dadurch gekennzeichnet, dass die Aufheizeinheiten (31) auf den Träger (22) der Fräseinheiten montiert sind.

## Claims

1. An installation for reprofiling at least one track on a railway line, including a milling device (13,14) mounted under a railway carriage (3) and movable relatively thereto, through the use of means for lifting and applying (4,5,6) against the track, characterized in that it includes at least one unit for heating (15,16,31) the track located in front of the milling device (13,14).

2. An installation according to claim 1, characterized in that the unit for heating (31) the track consists in a high frequency induction device.

3. An installation according to claim 1, characterized in that the heating unit (31) consists of a laser beam heating device.

4. An installation according to one of the preceding claims, characterized in that the heating unit (15,16) is connected to the underframe of the carraige by lifting means.

5. An installation according to one of the preceding claims, charcterized in that it includes a track cooling unit guided along the track, located behing the miling device and connected (17) to the underframe of the railway carriage by lifting means (70).

6. An installation according to claim 5, characterized in that the cooling unit (17) includes a frame (71) provided with an inlet orifice (76) and an outlet orifice (77) enabling the circulation of a cooling fluid; in that baffles (75) are arranged inside the frame so as to cause a turbulent flow of the cooling fluid.

7. An installation according to claim 1, characterized in that the milling device has at least two milling units (13,14) including each one at least one milling cutter driven in rotation by a motor; in that each milling unit is carried by a support movable vertically with respect to a frame (8,9) guided along the track; in that the two frames are of differing lengths and linked together along an axis perpendicular to the longitudinal axis of the track; in that these frames (8,9) are connected to the underframe of the carriage by means for lifting and application (4,5,6) against the track.

8. An installation according to claim 7, characterized in that the milling units are carried by a support (22,22') mounted slidably and vertically on the frame and in that means (25) are provided for controlling the position of this support with respect to the frame and therefore with respect fo the track.

9. An installation according to claim 1, characterized in that the milling units are carried by a support (44) pivoting on the frame about an axis perpendicular to the longitudinal axis of the track and in that this support is connected to a jack (49) controlling the angular position of the support with respect to the frame.

10. An installation according to claim 3, characterized in that the milling unit is mounted pivotally on its support (44) about an axis located in a vertical plane extending along an axis parallel to a longitudinal axis of the track.

11. An installation acccording to one of the preceding claims, characterized in that the frames (8,9) rest upon the track through bearing and guiding devices (10,11,12) provided with bearing rollers (18) or shoes (19) in contact with the running surface of the track and guiding shoes of rollers which bear upon the inner lateral face of the track.

12. An installation according to one of the preceding claims, characterized in that the frames (8,9) carrying the milling units associated with each one of the rails are connected by means of jacks (26) which make it possible to adjust the spacing of these frames.

13. An installation according to one of claims 7 to 12, characterized in that the heating units (31) are mounted beneath the frames (8,9) of the milling device.

14. An installation according to one of claims 7 to 12, characterized in that the heating units (31) are mounted on the support (22) of the milling units.
